# EUROPEAN PATENT SPECIFICATION

(11) **EP 0 592 349 B1**
(45) Date of publication and mention of the grant of the patent: **23.07.1997**
(21) Application number: 93610056.9
(22) Date of filing: 05.10.1993
(51) Int. Cl.: G01G 11/00

(54) **Belt weigher**
Transportbandwaage
Dispositif pour pesage continu sur bande transporteuse

(30) Priority: 05.10.1992 DK 1217/92
(43) Date of publication of application: 13.04.1994
(73) Proprietor: JESMA VEJETEKNIK ApS, 7100 Vejle (DK)
(72) Inventor: Johansen, Mogens, DK-7100 Vejle (DK)
(74) Representative: Skoett-Jensen, Knud

(56) References cited:
- GB-A- 1 156 109
- US-A- 3 944 050

## Description

The present invention relates to a conveyor-type weigher, i.e. a weigher for continuous weighing of a flow of materials or single objects being advanced on a conveyor belt above a weighing apparatus which, by way of connected registering means, provides continuous weight information about the material on the overhead belt.

Several considerable detail problems occur, of static as well as dynamic nature, when it is desirable for weighers of this type to perform with a high degree of accuracy. A noticeable general problem is the actual belt steering and control, as it is well known that in using conveyour belts, specific measures must be undertaken to ensure that the belts run "cleanly" in the lateral direction of movement, if not, they may slip out of control on the applied reversing rollers. In case of cruder conveyor belts, proper lateral belt guiding means may be used; but in case of accurate conveyor-type weighers, totally free belt mobility should be the aim. It is known and commonly practiced that the belt be kept in place in the lateral direction of the movement solely by letting the reversing rollers be "made with rising height", i.e. with a faintly arched course from end to end, whereby any friction causing lateral guide means may be omitted; at the passage of the rolls, the belts, typically of a non-elastic plastics web material, may adapt in the associated double-arched way, and thus, this problem will have been solved.

A prior art conveyor belt weighing mechanism is known from GB-1156109.

It has been found, though, that especially in the case of conveyor-type weighers, the transverse arching of the belt thus introduced gives rise to accuracy problems, in that uneven longitudinal tensions appear in the belt, whereby the weighing result may be influenced by variations of the cross-distribution of the flow of objects on the belt. This problem can be alleviated by making use of a comparatively extended length of the weighing belt and by placing the weighing area midway between the reversing rollers; the weighing area itself need not be particularly long and if at the inlet and outlet of this area, the belt is supported on plane support areas, then, when using a long belt, the weighing area itself will be free of significant longitudinal tension differences. In fact, this will actually necessitate a long belt and thus a correspondingly long building length of the conveyor-type weigher which, in consequence, poses heavy demands on the mechanical stabilization of the construction.

It is also both known and commonly practiced that for the lateral stabilization of the belt movement, special steering rollers are used, preferably disposed to engage with the return run of the belt between the primary reversing rollers, and which are controlled so as to make such turns which, through the associated belt steering, may compensate for automatically detected lateral displacements of the belt. It goes without saying that arrangements of this kind increase the price of the conveyor-type weighers considerably.

With the previously known conveyor-type weighers, these conditions have made it rather arduous to perform an exchange of the weighing belt itself. In many instances, such an exchange may be required, e.g. in a plant where it is required to switch to weighing another type of material not to be contaminated by residues from the material previously weighed which may cling to the belt. Rather than cleaning the operating belt, often it will be more economical to substitute the belt with a new or perhaps with a pre-cleaned belt, but with the hitherto used conveyor-type weigher constructions such exchanges have been difficult to execute.

By the invention, it has been found that a small modification of the reversing rollers may bring about an efficient lateral steering of the weighing belt so that it need not be of any particularly great length nor have any expensive servocontrol lateral guidance. It has furthermore been found that in doing so, it becomes relatively easy to produce a conveyor-type weigher whose weighing belt can be exchanged in a very simple manner, this being obtainable in that the weigher need not be double-sidedly stabilized or made with bulky adjustment means for turning a special guide roller.

By the invention, it is a unique concept that the weighing belt is guided around the reversing rollers projecting from a supporting machine frame and at their outermost ends being carried on a common side beam which is rigidly fixed in the area between the rollers onto said frame by means of transverse support portions extending through the space inside the path of motion of the weighing belt, the aim being that hereby, it shall be possible to pull off the belt instantly to be exchanged or cleaned, by slackening the belt preferably attained by lifting up a load roller resting against the top side of the return run of the belt. When the subject is a conveyor-type weigher with fine weighing accuracy it is essential for the side beam to be arranged and fixed in an extremely stabilized manner, whereby a rather solid construction becomes a requirement, and on this background it is particularly important that the belt length can be kept reasonably short to avoid the unit becoming too bulky. With a view to the desired easy removability of the weighing belt, it is also important that no projecting parts be found in front of the outwardly facing belt edge. This already implies that known lateral belt control means will be unsuited in the present arrangement.

It has been found that an effective lateral holding of the belt is achievable if the reversing rollers are provided with end portions of a slightly diminished diameter and with relatively sharp transitions to the external roller diameter, these transitions being located underneath the belt at some distance, e.g. 2-5 cm, from the respective belt side edges. Analogous with slightly longitudinally arched roller surfaces, this will cause certain differences in the belt tension, however, the essential part being that a wide middle area of the belt exists in which such differences will not occur since the present arrangement will allow for the roller surfaces to run perfectly straight across this entire middle area. When feeding the flow of materials onto the belt, care may be taken to ensure that the delivery will be made on this middle area exclusively, or almost exclusively, the width of which may be quite broad indeed, and when the entire flow can be advanced in this way, on a belt surface with an even tension, then the weighing accuracy may be quite high. The belt length may be minimized when the entire effective belt width passes around straight cylindrical rollers, whereby the length and the weight of the machine frame and the said outer side beam may be minimized, in addition to which, the applied lateral control means will not in any way obstruct an easy removal of the belt, after it has been slackened.

For the necessary operational tightening of the belt, a load roller weighing down the upper side of the return run of the belt may be used, as already indicated. This is a known arrangement, and it is furthermore known that this roller can be servocontrolled for such angular adjustments of the axis of the roller that hereby it is possible to control the belt sufficiently for it to assume a reasonably steady lateral position. However, the associated control means are normally incorporated in bulky housing portions at the ends of the roller such that these housings alone will obstruct free sideways removability of the belt. By the invention, it is foreseen that this load roller shall serve no other purpose but to weigh down on the return belt run as the lateral control is effected by other means. Hence the roller may be lodged, e.g. on pivotal arms being downwardly swivable from the machine frame and the said outer side beams, respectively, such that it can be shifted between a lower position freely on the belt, for the stretching of the belt, and an elevated neutral position leaving the belt in such a slackened state that it can be pulled off easily, sideways over the side beam end of the supporting system.

Correspondingly, a new belt, or the same belt having been externally cleaned, may be mounted or remounted in the conveyor-type weigher with a minimum of time consumed, because the belt can freely be slipped over the reversing rollers and then be tightened for operation by releasing the temporarily elevated load or tension roller for affecting the return belt run. Such an exchange operation will be feasible in just a few minutes, which is unique when compared to the relevant known art.

In the following, the invention is explained in more detail with reference to the drawing in which,
Fig. 1 is a perspective drawing of a conveyor-type weigher according to the invention,
Fig. 2 is a corresponding view thereof, shown with the weighing belt removed,
Fig. 3 is a perspective view of the conveyor-type weigher seen from the opposite side,
Fig. 4 is a perspective view to illustrate further details, and
Fig. 5 is a side view thereof.

The shown conveyor-type weigher comprises an apparatus housing with an upright chassis plate 2 on which is placed bearings 4 for projecting shafts for the support of reversing rollers 6 and 8 for a weighing belt 10. The rollers 6 and 8, or rather the outermost ends of the support shafts of these, are supported in carrier portions 12 positioned at the ends of a freely supported side beam 14 extending between the two rollers 6 and 8. This beam 14 is rigidly fixed to the machine frame plate by way of connecting rods 16 placed below the upper side plane of the rollers 6,8. Underneath the beam 14 is placed a heavy roller 18 resting against the upper side of the return run of the belt 10, this roller being suspended in pivotal arms 20 which, in a swivable way, are oblique downwardly extending from upper fix points 22 on the beam 14 and the chassis plate 2, respectively.

On the outer pivotal arm 20 is placed a handle 24 which can be turned between an embedded stand-by position and the shown projecting service position in which the handle can be used for the up-swing of the roller 18 into an elevated position in a suitable temporary locking engagement with the beam 14, such that the belt 10 can thusly be slackened. Following this, it will be possible just to go ahead performing a sideways pulling-off of the entire belt 10 over the beam-borne ends of the rollers 4. Similarly, it will be quite easy to slip a new or a cleaned belt 10 onto the conveyor structure, in that nothing will obstruct such an insertion, not at the rollers 4 or 18 or at any other place. An exchange of the belt can thus be made with a minimum of time and effort.

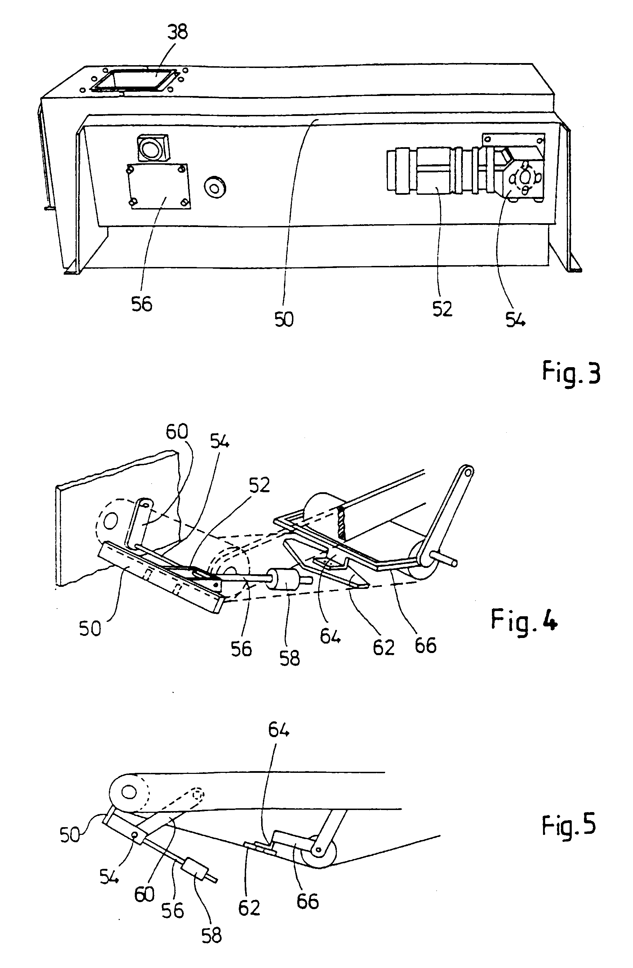

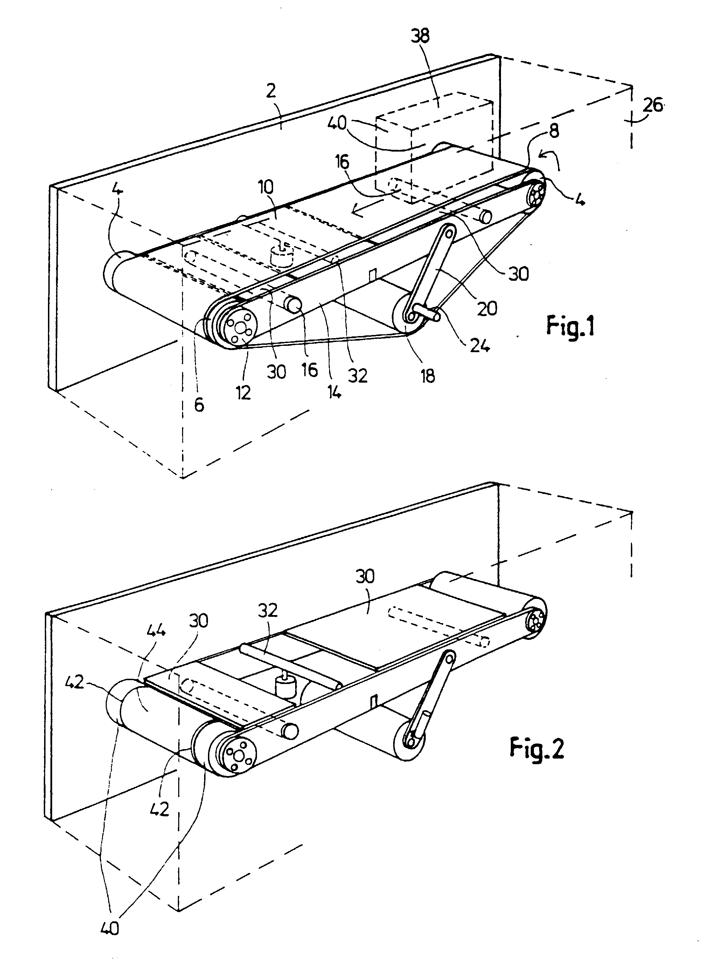

In Fig. 1 it is indicated that the conveyor-type weigher is preferably to be housed in a cabinet which, naturally, is also preferably to be as small as possible. On its front, this cabinet may have a removable panel part 26 which can be removed when the belt 10 is due to be exchanged. The said swivable lodging of the handle 24 serves to reduce the width of the apparatus as this need not be bigger than to leave room for the folded handle, which only needs to be unfolded, anyway, when the front panel 26 has been temporarily removed.

As shown more clearly in Fig. 2, beneath the top run of the belt 10, a couple of horizontal support plates 30 are placed extending from the respective reversing rollers 4,6, and 8 inwardly towards the middle of the belt run where, inbetween these, they border a free belt section which, approximately at the middle, pass above a transverse weighing beam 32, the upper side of which is positioned flush with the plates 30, and which at its mid-section is supported on a fixed pin 34 upwardly protruding from a single-point weighing cell 36, of the type made with an absorber housing mechanically absorbing occurring vibrations between the pin 34 and the interior of the weighing cell 36.

The weighing cell 36 is connected to a computer, not shown, which continuously registers the weight of the material being advanced on the weighing belt 10, i.e. the material is weighed with equal sufficiency whether it is advanced along the middle or along the sides of the belt 10.

At the upper side of the apparatus cabinet, an opening 38 is made through which materials can be fed to be weighed on the belt 10. Along the side edges of the opening 38, downwardly protruding guidance plates 40 are placed reaching almost all the way down to the belt 10, positioned such that one material supplied through the opening 36 will be deposited on the belt somewhat within the side edges of same.

As shown in Fig. 2 the reversing rollers 4 are made with outer slightly down-turned end portions 41 which, through more or less sharp transitions 42, continue in an absolutely straight and preferably completely smooth circular cylindrical interjacent portion 44 of these rollers. The transitions 42 are located at a distance of a few centimetres within the outer side edges of the belt 10, and, as mentioned before, it appears that through this simple arrangement, an efficient belt control in the lateral direction of movement of the belt can be achieved, such that the interjacent portions 44 of the rollers can remain straight cylindrical and thus condition that the belt 10 be uniformly tightened throughout the mid-section on which the flow of materials from the feeder opening 36 will be deposited.

Thus, for the belt 10, no special, projecting lateral control means are to be used which could obstruct the desired easy removal of the belt following the up-swing of the lower tension roller 18.

In Fig. 3, the apparatus is shown from above and from the rear side, and the inlet opening 38 on the upper side of the apparatus cabinet is clearly visible. Furthermore, it will be seen that on the rear side of the chassis plate 2, a projecting box part 50 is placed which supports externally an electro motor 52 running one of the rollers 4 through a transmission case 54, while the box part 50 at its opposite end has a detachable cover plate 56 covering an inserted sensor gaging the rotational speed of the passively driven cylinder 4; attached to the apparatus is a control part priming the prime motor 52 to such a velocity that the passive roller 8 is rotated with the exact speed matching the desired feeding speed of the belt 10.

It may prove necessary that on the belt 10, a continuous scraping of the outer as well as of the inner belt side be performed so that possible residues will not influence the weighing results. In this instance, the applied scraping means should be arranged such that they are easily releasable from their scraping engagement with the belt, and Figs. 4 and 5 show such examples:

At the driven roller 6 is placed a transverse scraper-blade 50, the top edge of which presses inwardly against the outside of the roller-supported belt 10. The blade 50 is mounted on the end portion of a U-shaped support part 52 being pivotally lodged on a pin 54 protruding from the chassis plate 2, and which continues in a rod 56 on which is mounted a sliding weight 58. The shaft pin 54 may be mounted on an angle- allignable arm 60, in Fig. 5. The release of the scraper-blade 50 from the belt 10 is easily achieved by swinging the rod 56 a little upwards, and between the shaft pin 54 and the support part 52, holding means may be inserted for the temporary locking of the system 50, 56 in the thus free-swung position.

In connection with the pivotal arms 20 of the lower roller 18, in order to scrape the inner belt side, a double-sidedly plough-shaped scraper-plate 61 is placed, being reversibly fixed to a downwardly protruding console part 64 at the middle of a U-shaped plate bracket 66 pivotally fixed to the ends of the shaft of the roller 18. This plate 62 scrapes off and removes occurring residues from the inner side of the belt 10, and in case of the plate being worn-down, it can be re-mounted in reverse position. Between one of the pivotal arms 20 and the bracket 66, a coupling mechanism may be inserted which, by an up-swing of the arms 20, also produces a lifting-up of the scraper-plate 62 from the belt 10 such that, subsequently, the belt will be completely disengaged to be pulled off sideways.

## Claims

1. Conveyor-type weigher with a weighing belt passing a weighing area and driven with a substantially straight course between the top sides of respective reversing rollers, characterized in that the reversing rollers are designed with an intermediate straight cylindrical portion, the length of which is smaller than the width of the belt, and with opposed end portions, the diameter of which is smaller than that of the intermediate portion such that the belt, at the sides, protrudes over a steep transition between the intermediate and the end portions.

2. Conveyor-type weigher according to claim 1, characterized in that the weigher includes guidance plates (40) for the downward guidance of goods to be weighed, delivering the goods solely on the belt section that cooperates with the intermediate portion of the reversing rollers.

3. Conveyor-type weigher according to claim 1, characterized in that it is made with reversing rollers mounted between a floor-supported machine chassis and a cantilever support beam connected to the chassis by means of support parts within the circumference of the weighing belt, and that a tension roller for the tigthening of the belt by pressing against the lower run of the belt is liftable so as to assume a locked position in which the belt is sideways removable from the weigher or respectively is insertable therein.

4. Conveyor-type weigher according to claim 1, characterized in that at the top side of the lower belt run, a plough-shaped scraper member is placed for the scraping of the inner belt surface facing the reversing rollers.

## Patentansprüche

1. Bandwaage mit einem Wägeband, das einen Wiegebereich passiert und mit einem im wesentlichen geraden Lauf zwischen den Oberseiten entsprechender Umkehrwalzen angetrieben ist, dadurch gekennzeichnet, daß die Umkehrwalzen mit einem geraden zylindrischen Zwischenabschnitt, dessen Länge kürzer als die Breite des Bandes ist, und mit gegenüberliegenden Endabschnitten ausgebildet sind, deren Durchmesser schmaler als der des Zwischenabschnittes ist, so daß das Band an den Seiten über einen steilen Übergang vom Zwischen- zum Endabschnitt hinausragt.

2. Bandwaage nach Anspruch 1, dadurch gekennzeichnet, daß die Waage Führungsplatten (40) für die Abwärtsführung der zu wiegenden Güter umfaßt, um die Güter einzig und allein auf dem Bandabschnitt, der mit dem Zwischenabschnitt der Umkehrwalzen zusammenwirkt, abzugeben.

3. Bandwaage nach Anspruch 1, dadurch gekennzeichnet, daß sie mit Umkehrwalzen ausgebildet ist, die zwischen einem bodengestützten Maschinenchassis und einem Auslegerstützbalken angebracht sind, der an dem Chassis mittels Stützteilen innerhalb des Umfanges des Wägebandes befestigt sind, und daß eine Spannwalze zum Spannen des Bandes durch Pressen gegen den unteren Lauf des Bandes hebbar ist, um eine Arretierposition zu erreichen, in der das Band seitwärts von der Waage entfernbar bzw. darin einsetzbar ist.

4. Bandwaage nach Anspruch 1, dadurch gekennzeichnet, daß an der Oberseite des unteren Bandtrums ein pflugförmiges Schabe- oder Kratzelement angeordnet ist, um die innere Oberfläche des Bandes, die den Umkehrwalzen gegenüberliegt, glattzuschaben.

## Revendications

1. Dispositif de pesage du type à bande sans fin, ayant une bande de pesage passant une zone de pesage et entraînée avec une course sensiblement rectiligne, entre les dessus de rouleaux opposés respectifs,
caractérisé en ce que les rouleaux opposés sont conçus avec une partie cylindrique rectiligne intermédiaire, dont la longueur est plus petite que la largeur de la bande, et ayant des parties d'extrémité opposées, dont le diamètre est plus petit que celui de la partie intermédiaire de sorte que la bande, sur les côtés, fait saillie sur une transition abrupte entre les parties d'extrémité et la partie intermédiaire.

2. Dispositif de pesage du type à bande sans fin selon la revendication 1,
caractérisé en ce que le dispositif de pesage inclut des plaques de guidage (40) pour le guidage vers le bas des produits à peser, délivrant les produits seulement sur la section de bande qui coopère avec la partie intermédiaire des rouleaux opposés.

3. Dispositif de pesage du type à bande sans fin selon la revendication 1,
caractérisé en ce qu'il est réalisé avec des rouleaux opposés montés entre un châssis de machine supporté sur le sol et une poutre de support en porte-à-faux reliée au châssis par l'intermédiaire de pièces de support à l'intérieur de la circonférence de la bande de pesage, et en ce qu'un rouleau de tension pour tendre la bande en pressant contre le brin inférieur de la bande, est apte à se soulever afin de prendre une position verrouillée dans laquelle la bande est latéralement amovible du dispositif de pesage ou, respectivement, insérable dans celui-ci.

4. Dispositif de pesage du type à bande sans fin selon la revendication 1,
caractérisé en ce que sur le dessus du brin inférieur de la bande, est placé un racloir en forme de soc pour racler la surface interne de la bande faisant face aux rouleaux opposés.
